(19) **Europäisches Patentamt / European Patent Office / Office européen des brevets**

(11) **EP 4 224 359 A1**

(12) **EUROPEAN PATENT APPLICATION**

(43) Date of publication:
**09.08.2023 Bulletin 2023/32**

(21) Application number: **23155355.3**

(22) Date of filing: **07.02.2023**

(51) International Patent Classification (IPC):
**G06F 40/30** (2020.01)     **G06N 3/08** (2023.01)
**G06N 3/02** (2006.01)

(52) Cooperative Patent Classification (CPC):
**G06F 40/30; G06N 3/02; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.02.2022 US 202263307500 P**

(71) Applicant: **Accenture Global Solutions Limited Dublin 4 (IE)**

(72) Inventors:
• **KHETAN, Vivek Kumar**
  **San Francisco, 94105 (US)**
• **FANO, Andrew**
  **Lincolnshire, 60069 (US)**

(74) Representative: **Swindell & Pearson Limited**
  **48 Friar Gate**
  **Derby DE1 1GY (GB)**

(54) **EVALUATION OF RELIABILITY OF ARTIFICIAL INTELLIGENCE (AI) MODELS**

(57) Systems and methods for evaluating reliability of a model are disclosed, including a processor that may include a data augmentor and a model evaluator. The data augmentor may receive a task data pertaining to information related to a pre-defined task to be performed by the model. The data augmentor may augment the task data to obtain an augmented aspect data. The model evaluator may evaluate a trained model based on the augmented aspect data to obtain aspect evaluation metrics. The model may be an artificial intelligence (AI) model that may be trained using the task data. The evaluation may enable to assess performance of the trained model by computing a performance score based on the aspect evaluation metrics. The performance score may help evaluate the reliability of the model in a pre-defined domain.

FIG. 3

**Description**

**PRIORITY CLAIM**

This application claims priority to US provisional patent application bearing Application Serial Number 63/307,500, filed on February 7, 2022, the disclosure of which is incorporated by reference in its entirety herein.

**BACKGROUND**

In recent years, there has been a rising trend in the implementation of models for prediction purposes or in generation of automated responses. For example, language models may generate text related to different domains such as, for example, educational field, medical field, customer service, and other such areas. In general, the models may be trained based on a wide variety of knowledge contained in a corpus and not in a domain specific manner. Therefore, these models may not provide reliable results or accuracy in individual subdomains. This is because it may be impossible to anticipate in advance how these models may perform when generating text in particular subdomains. This may lead to inefficient model employment, especially in fields demanding highly accurate responses such as, for example, medical domain.

Further, conventional techniques of evaluating reliability of the models may be ineffective as these techniques mainly rely on evaluation based on task data/base queries. However, the base queries may be insufficient in assessing the reliability of the models, as the absence of ground truth or the knowledge of best answer to the base queries may make it difficult to correctly evaluate the performance of the model. This may result in a superficial evaluation of the model, with a huge margin for erroneous and faulty responses, which may not be usable or tolerated across domains requiring fairly high accuracy. Further, in absence of an effective evaluation, it may not be practically feasible to understand a need for re-training the model for improvement in the performance. This may not only lead to added time and costs for model employment but also for ambiguous re-training of the models.

There is, therefore, a need for systems and methods for addressing at least the above-mentioned problems in existing systems.

**SUMMARY**

This section is provided to introduce certain objects and aspects of the present disclosure in a simplified form that are further described below in the detailed description. This summary is not intended to identify the key features or the scope of the claimed subject matter.

In an aspect, the present disclosure relates to a system including a processor that may include a data augmentor and a model evaluator. The processor may be coupled with a memory that stores instructions to be executed by the processor. The data augmentor may receive a task data pertaining to information related to a pre-defined task to be performed by a model. The data augmentor may augment the task data to obtain an augmented aspect data. The augmented aspect data may include a plurality of aspect queries obtained by augmentation of a base query in the task data based on at least one aspect. In an example embodiment, each aspect may pertain to a variable form of assessment of the base query. The model evaluator may evaluate a trained model based on the augmented aspect data to obtain aspect evaluation metrics. In an example embodiment, the model may be an artificial intelligence (AI) model that may be trained using the task data. In an example embodiment, the model may be a deep learning (DL) based language model. The evaluation may enable to assess performance of the trained model by computing a performance score based on the aspect evaluation metrics. The performance score may enable to evaluate reliability of the model in a pre-defined domain.

In an example embodiment, the reliability of the trained model in the pre-defined domain may be evaluated based on a pre-defined threshold value. In an example embodiment, the pre-defined threshold value may be configurable based on the pre-defined domain.

In an example embodiment, the model may be re-trained using the task data based on the performance score being lower than the pre-defined threshold value. In an example embodiment, the trained model may be implemented for prediction in the pre-defined domain based on the performance score being greater than the pre-defined threshold value.

In an example embodiment, the processor may include a fine tuning engine to execute a fine-tuning iterative loop to re-train the model based on the performance score being lower than the pre-defined threshold value. In an example embodiment, the fine-tuning iterative loop may correspond to repeated cycles comprising re-training of the model based on the task data and a subsequent evaluation of the re-trained model based on the augmented aspect data.

In an example embodiment, the aspect may pertain to at least one of a contradiction aspect, a counterfactual aspect, a negation aspect, a domain based aspect, and a style transfer aspect.

In an example embodiment, the fine-tuning iterative loop may include re-training of the model based on the task data and a loss function including a penalization parameter. In an example embodiment, the penalization parameter may pertain to penalization corresponding to one or more aspects of the augmented aspect data.

In an example embodiment, an extent of the penalization may depend on model performance and accuracy with respect to the augmented aspect data. In an example embodiment, the penalization of the loss function for each aspect may be based on a pre-defined threshold.

In another aspect, the present disclosure relates to a method for evaluating reliability of a model. The method may include augmenting, by a processor, a task data to obtain an augmented aspect data. The augmented aspect data may include a plurality of aspect queries obtained by augmentation of a base query in the task data based on at least one aspect. In an example embodiment, each aspect may pertain to a variable form of assessment of the base query. The method may include training, by the processor, using the task data, the model to obtain a trained model. In an example embodiment, the model may be an AI model that may be trained using the task data. In an example embodiment, the model may be a DL based language model. The method may include evaluating, by the processor, based on the augmented aspect data, the trained model to obtain aspect evaluation metrics. The evaluation may enable to assess performance of the trained model by computing a performance score based on the aspect evaluation metrics. The performance score may enable to evaluate reliability of the trained model in a pre-defined domain. The method may include executing, by the processor, a fine-tuning iterative loop to re-train the model based on the performance score being lower than a pre-defined threshold value. The fine-tuning iterative loop may correspond to repeated cycles including the re-training of the model based on the task data and a subsequent evaluation of the re-trained model based on the augmented aspect data.

In an example embodiment, the method may include implementing the trained model for prediction in the pre-defined domain based on the performance score being greater than the pre-defined threshold value.

In another aspect, the present disclosure relates to a non-transitory computer-readable medium including machine-executable instructions that may be executable by a processor to augment a task data to obtain an augmented aspect data. The augmented aspect data may include a plurality of aspect queries obtained by augmentation of a base query in the task data based on at least one aspect. In an example embodiment, each aspect may pertain to a variable form of assessment of the base query. The processor may train a model using the task data to obtain a trained model. In an example embodiment, the model may be an AI model that may be trained using the task data. In an example embodiment, the model may be a DL based language model. The processor may evaluate the trained model based on the augmented aspect data to obtain aspect evaluation metrics. The evaluation may enable to assess performance of the trained model by computing a performance score based on the aspect evaluation metrics. The performance score may enable to evaluate reliability of the trained model in a pre-defined domain. The processor may execute a fine-tuning iterative loop to re-train the model based on the performance score being lower than a pre-defined threshold value. The fine-tuning iterative loop may correspond to repeated cycles including the re-training of the model based on the task data and a subsequent evaluation of the re-trained model based on the augmented aspect data.

In an example embodiment, the processor may implement the trained model for prediction in the pre-defined domain based on the performance score being greater than the pre-defined threshold value.

In an example embodiment, the pre-defined threshold value may be configurable based on the pre-defined domain.

In an example embodiment, the aspect may pertain to at least one of a contradiction aspect, a counterfactual aspect, a negation aspect, a domain based aspect, and a style transfer aspect.

In an example embodiment, the fine-tuning iterative loop may include re-training of the model based on the task data and a loss function including a penalization parameter. In an example embodiment, the penalization parameter may pertain to penalization corresponding to one or more aspects of the augmented aspect data.

In an example embodiment, an extent of the penalization may depend on model performance and accuracy with respect to the augmented aspect data. In an example embodiment, the penalization of the loss function for each aspect may be based on a pre-defined threshold.

**BRIEF DESCRIPTION OF DRAWINGS**

The accompanying drawings, which are incorporated herein, and constitute a part of this invention, illustrate exemplary embodiments of the disclosed methods and systems in which like reference numerals refer to the same parts throughout the different drawings. Components in the drawings are not necessarily to scale, emphasis instead being placed upon clearly illustrating the principles of the present invention. Some drawings may indicate the components using block diagrams and may not represent the internal circuitry of each component. It will be appreciated by those skilled in the art that invention of such drawings includes the invention of electrical components, electronic components or circuitry commonly used to implement such components.

FIG. 1 illustrates an exemplary system diagram for evaluation of reliability of a model, in accordance with embodiments of the present disclosure.

FIG. 2A illustrates an exemplary representation of a base query in task data.

FIG. 2B illustrates an exemplary representation of a conventional evaluation of reliability of a model.

FIG. 3 illustrates an exemplary block diagram for evaluation of reliability of a model using the system of FIG. 1, in accordance with embodiments of the present disclosure.

FIG. 4 illustrates an exemplary representation of an aspect query in an augmented aspect data, in accordance with embodiments of the present disclosure.

FIG. 5 illustrates an exemplary representation of a conventional model evaluation using task data.

FIG. 6 illustrates an exemplary representation for model evaluation using augmented aspect data, in accordance with embodiments of the present disclosure.

FIG. 7 illustrates an exemplary flow diagram of a method for evaluating reliability of a model, in accordance with embodiments of the present disclosure.

FIG. 8 illustrates a hardware platform in which or with which embodiments of the present disclosure may be implemented.

The foregoing shall be more apparent from the following more detailed description of the disclosure.

## DETAILED DESCRIPTION

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address all of the problems discussed above or might address only some of the problems discussed above. Some of the problems discussed above might not be fully addressed by any of the features described herein.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the invention as set forth.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

The word "exemplary" and/or "demonstrative" is used herein to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive-in a manner similar to the term "comprising" as an open transition word-without precluding any additional or other elements.

Reference throughout this specification to "one embodiment" or "an embodiment" or "an instance" or "one instance" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Various embodiments described herein provide a solution, in the form of a system and a method, for evaluation of reliability of a model such as, for example, artificial intelligence (AI) models, machine learning (ML) models, and deep learning (DL) models. Specifically, the embodiments described herein provide a system and a method that may address the issue of assessing reliability of models that are trained using wider domain knowledge, which may not be specific to a domain or a sub-domain. Further, the embodiments described herein provide a system and a method that aid in evaluating a trained model based on an augmented data set derived from a task data that is used for training the model. Thus, the system and method enables to test the trained models not only based on the information used for training the model, but also testing the ability of the models using augmented data for wider scope of assessment. Additionally, based on the outcome of the evaluation, the embodiments described herein provide a solution to fine-tune the models by re-training the models if the models do not perform as per pre-defined expectation or a pre-defined threshold.

In an example embodiment, the proposed system may augment task data to obtain an augmented aspect data. The task data may pertain to information related to a pre-defined task to be performed by a model. The augmented aspect data may include a plurality of aspect queries obtained by augmentation of a base query in the task data based on at least one aspect. In an example embodiment, each aspect pertains to a variable form of assessment of the base query. For example, the base query may pertain to a simple question and the aspect queries may pertain to various possible forms of the question related to different aspects. In an example embodiment, the system may evaluate reliability of the model in a pre-defined domain, wherein the model is trained using the task data. The evaluation may be performed based on the augmented aspect data to obtain aspect evaluation metrics, which enable to assess performance of the trained model. Thus, unlike conventional systems and methods that evaluate reliability of the model based only on basic task data, the system and method described herein may enable to evaluate the model based on various aspects pertaining to the augmented aspect data. This may enable consistent and wider scope of assessment of the model reliability in a pre-defined domain. In an example embodiment, the system and method may also facilitate execution of a fine-tuning iterative loop to re-train the model, if the performance of the model is less than an expected threshold. In effect, the implementation of the proposed system and method may enable to improve overall performance of the model in a specific domain.

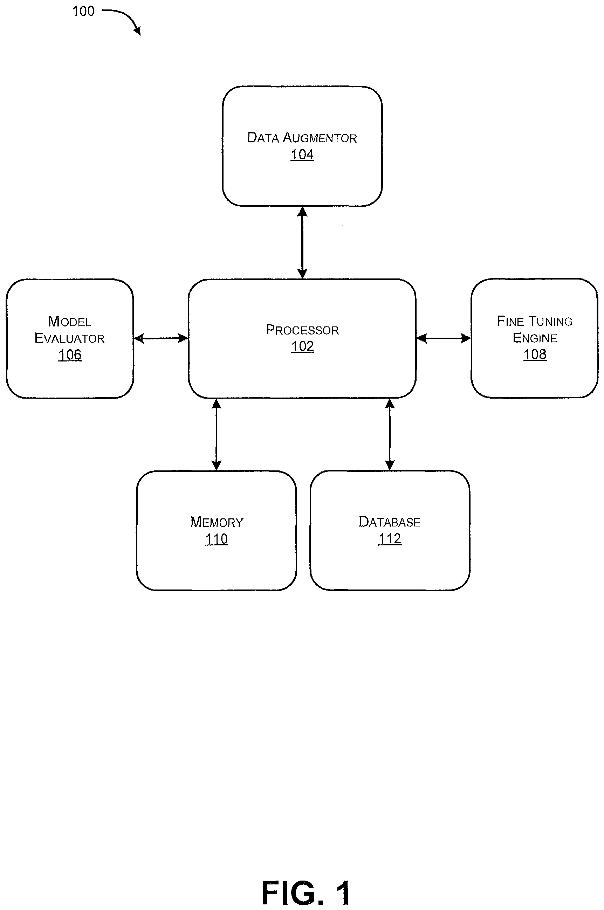

The various embodiments throughout the disclosure will be explained in more detail with reference to FIGs. 1-8.

FIG. 1 illustrates an exemplary system diagram 100 for evaluation of reliability of a model, according to embodiments of the present disclosure. As shown in FIG. 1, the system 100 may be implemented by way of a single device or a combination of multiple devices that may be operatively connected or networked together. It may be appreciated that the described components/modules/engines are implemented via a processor. The system 100 may be implemented in a hardware or a suitable combination of hardware and software.

Referring to FIG. 1, the system 100 may include at least one processor 102. The processor 102 may be coupled with a memory 110 and a database 112. The memory 110 may store instructions to be executed by the processor 102. The processor 102 may include or may be operatively coupled to a data augmentor 104, a model evaluator 106, and a fine tuning engine 108.

In an example embodiment, the system 100 may be a hardware device including the processor 102 for executing machine-readable program instructions to perform one or more operations related to the evaluation of model reliability. Execution of the machine-readable program instructions by the processor 102 may enable the proposed system 100 to establish data enrichment and augmentation. The hardware may comprise a combination of discrete components, an integrated circuit, an application-specific integrated circuit, a field programmable gate array, a digital signal processor, or other suitable hardware. The software may comprise one or more objects, agents, threads, lines of code, subroutines, separate software applications, two or more lines of code or other suitable software structures operating in one or more software applications or on one or more processors such as 102. The processor 102 may include, for example, microprocessors, microcomputers, microcontrollers, digital signal processors, central processing units, state machines, logic circuits, and/or any devices that manipulate data or signals based on operational instructions. Among other capabilities, the processor 102 may fetch and execute computer-readable instructions from the memory 110 operationally coupled with the system 100 for performing tasks such as data processing, input/output processing, feature extraction, and/or any other functions. Any reference to a task in the present disclosure may refer to an operation being, or that may be, performed on data.

In an example embodiment, the data augmentor 104 may include one or more engines/modules for augmenting a task data pertaining to information related to a pre-defined task to be performed by a model. In an example, the task data may include a base query and/or supplementary information such as, for example, clinical notes. The augmentation may facilitate to obtain an augmented aspect data. The augmented aspect data may include a plurality of aspect queries obtained by augmentation of the base query in the task data based on at least one aspect. For example, the base query may pertain to a simple question, and the aspect queries may include various possible forms of the question related to different aspects pertaining to the base query. In an example embodiment, each aspect may pertain to a variable form of assessment of the base query. The aspect may pertain to different ways of questioning the base query or related factors. For example, the aspect may include, but not be limited to, a contradiction aspect, a counterfactual aspect, a negation aspect, a domain based aspect, a style transfer aspect, and other such aspects such as, but not limited to, real world knowledge, adversarial aspect, etc. that may enable the system 100 to evaluate the reliability of the model. In an example embodiment, the augmentation of the task data may be completely automated. In another example embodiment, the augmentation of the task data may be partly automated and may include manual assistance. In yet another example embodiment, the augmentation of the task data may be performed by techniques such as, for example, crowdsourcing. The term "crowdsourcing" may refer to a method of obtaining data such as information, opinions, and such details from a large group of people who submit the data via various modes such as, for example, the Internet, social media, smartphone applications, and other such modes. It may be appreciated that the augmentation of the task data may not be limited to the mentioned embodiments and various other techniques of augmentation may be possible.

In an example embodiment, the model evaluator 106 may evaluate a trained model based on the augmented aspect data to obtain aspect evaluation metrics. The evaluation may enable the system 100 to assess the performance of the trained model by computing a performance score based on the aspect evaluation metrics. Using the performance score, the system 100 may be able to evaluate the reliability of the model in a pre-defined domain. The trained model may be an artificial intelligence (AI) model such as a machine learning (ML) model, a deep learning (DL) model, or other AI models. For example, the trained model may include transformer architecture based DL model that is trained using the task data. In an example embodiment, the transformer architecture based DL model may be combined with one or more functions pertaining to, but not limited to, a language model, feedforward neural network model, radial basis function neural networks model, multi-layer perceptron (MLP) model, convolution neural network (CNN) model, recurrent neural network model, modular neural network model, sequence to sequence model, and other AI/ML/DL models. In an example embodiment, the pre-defined domain may include, but not be limited to, educational field, medical, research, customer service, apparel, marketing, and other such domains. It may be appreciated that the mentioned models/domains are exemplary and other types of models may also be evaluated for various other domains by way of the proposed systems and methods described herein.

In an example embodiment, the model evaluator 104 may evaluate the reliability of the trained model in the pre-defined domain based on the performance score. For example, if the performance score is lower than a pre-defined threshold value, the trained model may be re-trained using the task data. In another example, if the performance score is higher than the pre-defined threshold value, the trained model may be implemented for prediction in the pre-defined domain. In an example embodiment, the fine tuning engine 108 may execute a fine-tuning iterative loop to re-train the model, if the performance score is lower than the pre-defined threshold value. In an example embodiment, the fine-tuning iterative loop may correspond to repeated cycles including re-training of the model based on the task data and a subsequent evaluation of the model based on the augmented aspect data. In another example embodiment, the fine tuning engine 108 may re-train the model based on at least one of the task data and the augmented aspect data to ensure that that aspects pertaining to the augmented aspect data are also considered for re-training the model. For example, the fine-tuning iterative loop may include re-training the model based on the task data while considering a loss function that may include a penalization parameter. In an example embodiment, the penalization parameter may pertain to penalization corresponding to one or more aspects of the augmented aspect data. The extent of penalization may depend on model performance or accuracy with respect to the augmented aspect data. In an example embodiment, the penalization of the loss function may be performed for each related aspect based on a pre-defined threshold. For example, in a typical evaluation of the trained model based only on task data, the below equation may be applied:

$$J(\theta_0, \theta_1) = h_\theta(x) - y$$

wherein x = input (pertaining to task data),
y = corresponding output, and
$h_\theta$ = learned model prediction.

Further, in reference to the above equation, in a typical fine-tuning process, the associated loss function may include penalization that is only based on the task data, which may be as shown in the below equation:

$$\theta_j = \theta_i - \alpha \frac{\partial}{\partial \theta_j} J(\theta_0, \theta_1)$$

wherein $\alpha$ = learning rate (may have a numerical value), and the expression $\frac{\partial}{\partial \theta_j} J(\theta_0, \theta_1)$ may correspond to a penalization parameter for penalizing the model based on task data.

In an example embodiment, the penalization may be performed based on various aspects pertaining to the augmented aspect data. For example, using the proposed system 100, the model evaluator 106 may evaluate the performance of the trained model based on the task data as well as various aspects of the task i.e. augmented aspect data, wherein the evaluation based on the aspects may include the equation as mentioned below:

$$J_1(\theta_0, \theta_1) = h_\theta(x_1) - y_1$$

$$J_2(\theta_0, \theta_1) = h_\theta(x_2) - y_2$$

wherein $x_1, x_2$ = inputs pertaining to a first aspect and a second aspect, respectively, in the augmented aspect data,

$y_1, y_2$ = corresponding output, and
$h_\theta$ = learned model prediction.

Further, in reference to the above equation, and in an example embodiment of the proposed system, for re-training or fine-tuning the model, an associated loss function may be considered that may include penalization that is not only based on the task data but also based on the aspects pertaining to the task (i.e. augmented aspect data) that may be as shown in the below equation:

$$\theta_j = \theta_i - \alpha^1 \frac{\partial}{\partial \theta_j} J(\theta_0, \theta_1)$$

wherein $\alpha^1$ = updated learning rate that may account for how the trained model may behave based on augmented aspect data pertaining to various aspects of the task. The learning rate or updated learning rate may be considered as a tuning parameter that may facilitate to determine the extent or change or update in corresponding weights pertaining to the model.

$$\alpha^1 = \alpha + \beta J_1(\theta_0, \theta_1) + \lambda J_2(\theta_0, \theta_1)$$

wherein, $\beta$ = numerical value based on a threshold pertaining to the first aspect, and $\lambda$ = numerical value based on a threshold pertaining to the second aspect.

It may be appreciated that the above-mentioned equation is exemplary (and shown for 2 aspects), however, several other types of equations and/or aspects may be used while computing the penalization parameter for the fine-tuning.

In an example embodiment, the learning rate $\alpha$ and the updated learning rate $\alpha^1$ may be a numerical value such as, for example, 0.4 or 0.3 such that the model is trained based on the various learning rates to obtain the best model and resultant accuracy. The updated learning rate may pertain to not only the main task but may also be representative of accuracy on task aspects in the augmented aspect data. Various other aspects/features may be possible that may enable the system 100 to evaluate the model for improving accuracy and performance of the model.

Although FIG. 1 shows exemplary components of the system diagram 100, in other embodiments, the system diagram 100 may include fewer components, different components, differently arranged components, or additional functional components than depicted in FIG. 1. Additionally, or alternatively, one or more components of the system diagram 100 may perform functions described as being performed by one or more other components of the system diagram 100.

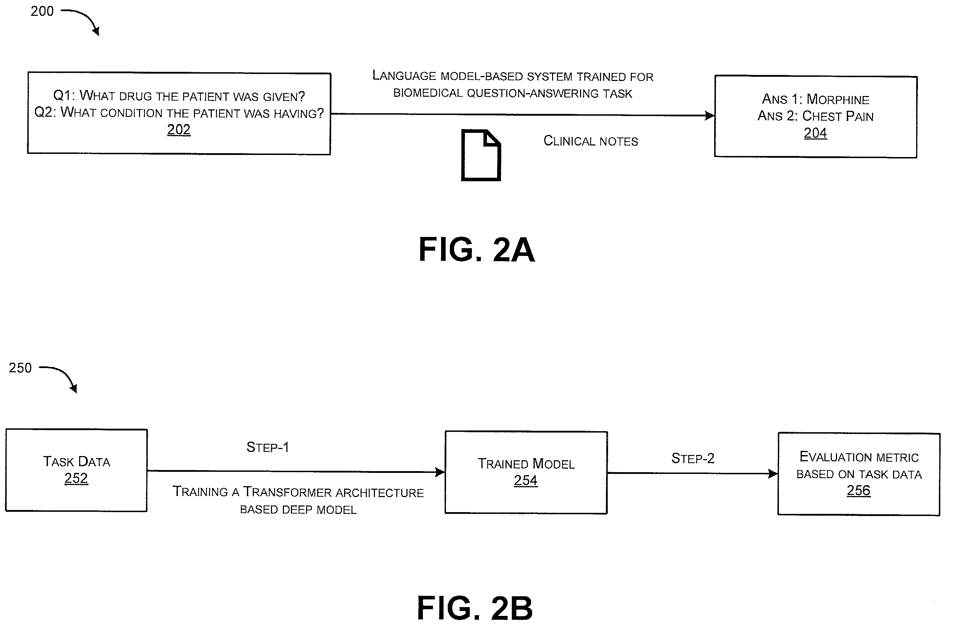

FIG. 2A illustrates an exemplary representation 200 of a base query in a task data and FIG. 2B illustrates an exemplary representation 250 of a conventional evaluation of a model. As shown in FIG. 2A, the task data may pertain to a bio-medical domain and may include one or more bio-medical related base queries 202. The base query 202 may include questions such as, for example, *"What drug the patient was given?", "What condition the patient was having?",* and other such basic queries, wherein the answers predicted/provided by a trained language model may be as shown in 204.

Further, as shown in FIG. 2B, a trained model 254 may be obtained by training the model based on the task data 252. In a conventional scenario, the trained model 254 may be evaluated based only on the task data, as shown in 256. Thus, the evaluation in a conventional scenario may be limited to base queries in the task data with no assessment of relevance of model answer and/or answers for the queries related to various aspects of the base query. However, the evaluation performed in this manner may not be reliable as it fails to examine whether the generated answer(s) or text reflects any aspects of the answer. Further, the need for better reliability may become extremely significant in case of specific domains such as, but not limited to, medical domain based models as the expected answer/prediction may require high accuracy and consistency. For example, a base query such as "where is the nearest hospital" may lead to any answer related to a medical hospital, an animal hospital, and/or any other answer, and hence may not be technically accurate/relevant, which may make it difficult to trust or rely on the models. Further, as the models may be trained using a general or broader domain data, which may not be domain specific, the predicted answer(s) obtained by the models may be vague/inconsistent. However, the systems and methods described herein provide an effective solution in this regard, as explained in the following figures.

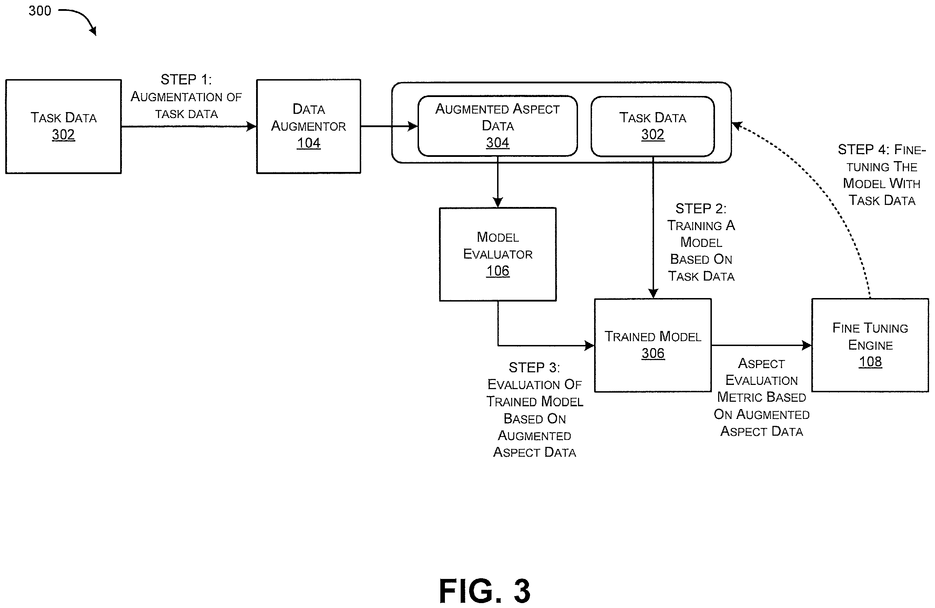

FIG. 3 illustrates an exemplary block diagram 300 for evaluation of reliability of a model by using the system 100 of FIG. 1, according to embodiments of the present disclosure. As shown in FIG. 3, the data augmentor 104 may receive task data 302 pertaining to information related to a pre-defined task to be performed by a model. In an example embodiment, the model is an AI model that may be trained using the task data. In an example embodiment, the model may be a DL based language model in a language model network. The data augmentor 104 may augment the task data 302 to obtain an augmented aspect data 304 (step 1). In an example embodiment (as shown in step 2), the model may be trained based on the task data 302, which may lead to a trained model 306. The model evaluator 106 may evaluate the trained model based on augmented aspect data (step-3) to obtain aspect evaluation metrics. The evaluation may enable to assess the performance of the trained model by computing a performance score based on the aspect evaluation metrics. The performance score may enable to evaluate reliability of the model in a pre-defined domain. In an example embodiment, the model evaluator 106 may evaluate the reliability of the trained model based on the performance score. For example, if the performance score is lower than a pre-defined threshold value, the trained model 306 may be re-trained. In another example, if the performance score is higher than the pre-defined threshold value, the trained model may be implemented for prediction in the pre-defined domain. In an example embodiment, the evaluation or the generation of the performance score may be calculated using the Bidirectional Encoder Representations from Transformers (BERT) technique. The BERT technique may be a neural network-based technique for natural language processing. Various other techniques may be used in the model evaluation.

In an example embodiment, the value of the pre-defined threshold may vary based on the pre-defined domain. For example, the threshold may be set for 70-80% accuracy if the model is used for prediction in a domain related to apparel industry. In another example, if the domain is related to medical field, then the threshold may be relatively higher, for example, 95% or higher, because a misleading information may prove to be fatal in such domains. It may be appreciated that the thresholds mentioned are exemplary and the threshold parameters and/or value may vary based on the domain and other factors. As shown in FIG. 3, in step 4, the fine tuning engine 108 may execute a fine-tuning iterative loop to re-train the model, if the performance score is lower than the pre-defined threshold value. The fine-tuning iterative loop may correspond to repeated cycles including re-training of the model based on the task data and/or the augmented aspect data, and a subsequent evaluation of the model based on the augmented aspect data.

The augmented aspect data may include a plurality of aspect queries obtained by augmentation of a base query in the task data based on at least one aspect. In an example embodiment, each aspect may pertain to a variable form of assessment of the base query. For example, the aspect may pertain to, but not be limited to, a contradiction aspect, a counterfactual aspect, a negation aspect, a domain based aspect, and a style transfer aspect.

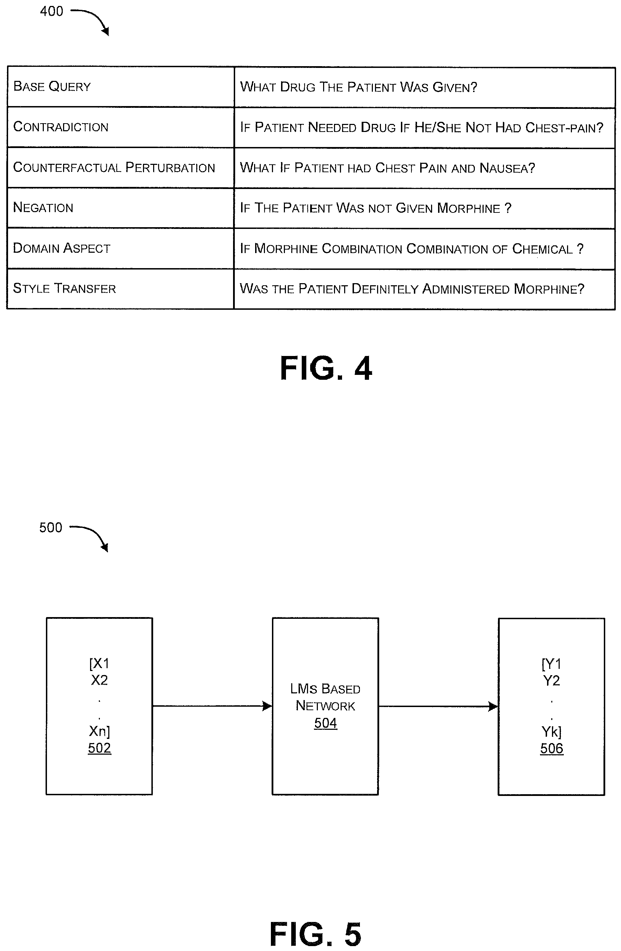

FIG. 4 illustrates an exemplary representation 400 of aspect query in an augmented aspect data, according to embodiments of the present disclosure. As shown in FIG. 4, for a base query in a task data such as, for example, *"What drug the patient was given?",* there may be various aspect queries. For example, an aspect may be contradiction aspect involving a contradictive question with respect to the base query, such as, for example, *"If patient needed drug if he/she not had chest-pain?".* In another example, another aspect may be counterfactual aspect related to counter-questioning the base query that may lead to an aspect query such as, for example, *"What if patient had chest pain and nausea?".* In another example, another aspect may be negation aspect that may pertain to negation of the base query that may lead to an aspect query such as, for example, *"If the patient was not given morphine?".* In another example, another aspect may be domain related aspect that may pertain to a domain based aspect query such as, for example, *"If morphine*

*combination of chemical?".* In another example, another aspect may be style transfer aspect (such as, for example, writing style for NLP or visual style for computer vision) that may lead to an aspect query such as, for example, *"Was the patient definitely administered morphine?".* The described aspects/aspect queries may enable to assess a model in a more specific manner compared to conventional evaluation based on base query. It may be appreciated that the mentioned examples of aspect and/or aspect queries are only exemplary and various such aspects/queries are possible.

FIG. 5 illustrates an exemplary diagram representation 500 showing a conventional evaluation using task data. As shown in FIG. 5, the conventional evaluation may rely on evaluating a model based on task data 502 including base queries such as X1, X2, .....Xn. For example, the model may be a trained model associated with a language model (LM) based network. As shown in FIG. 5, the evaluation for assessing model performance may be performed depending on the output 506 to the base queries, wherein the output 506 may include respective response to the base queries (X1, X2, ..... Xn) as Y1, Y2,......Yk. However, relying only on the base queries/task data for evaluating the model may not help to understand correctness of the model in terms of accuracy, relevance, context, and other such factors. Therefore, using augmented aspect data for evaluation may be more efficient in evaluating the model.

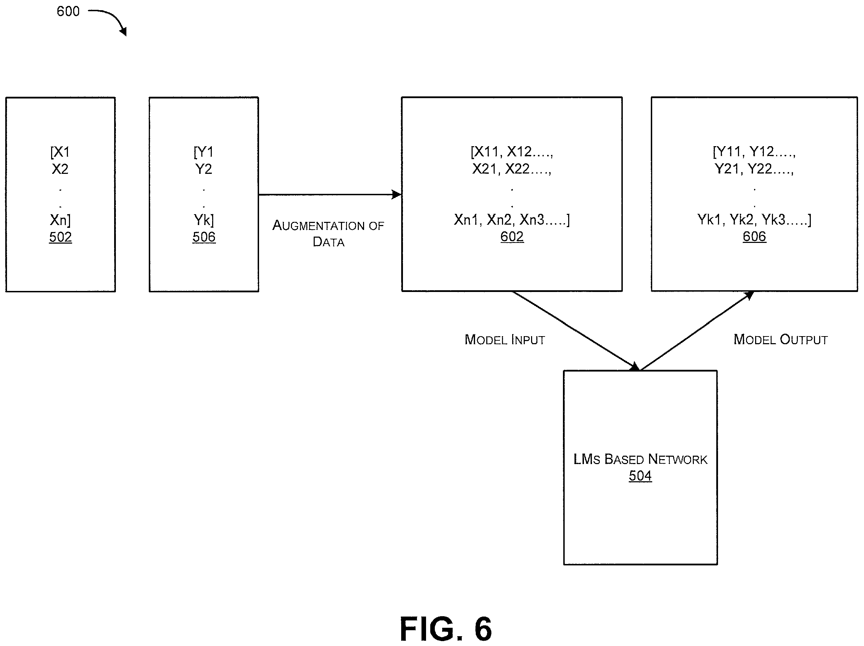

FIG. 6 illustrates an exemplary system diagram 600 for evaluation of model reliability using augmented aspect data, according to embodiments of the present disclosure. As shown in FIG. 6 and as explained hereinbefore, the base queries (X1, X2, .....Xn) 502 may be augmented, based on one or more aspects, to build an augmented dataset 602 including aspect queries such as (X11, X12, X21, X22, ..... Xn1, Xn2, Xn3...). The model may be evaluated based on the aspect queries such as (X11, X12, X21, X22, ..... Xn1, Xn2, Xn3,....) that may lead to corresponding output 606 such as (Y11, Y12 ....... Y2 1, Y22,.....,Yk1, Yk2,....). The resultant evaluation may lead to an improved assessment and may indicate a need for fine-tuning the model based on performance of the model with respect to the augmented dataset.

Example scenario

Considering that a base query in task data (X, Y) *is "I was expecting more from the movie but was disappointed, negative sentiment."* The below table shows the augmented data across possible dimensions such as six dimensions.

| Data type | Type formal definition | Example |
|---|---|---|
| Base data: (X, Y) | This is the data of the task provided. | (I was expecting more from the movie but was disappointed. **Negative sentiment**) |
| Negation based augmentation | Change the sentiment by including a negation. | (I was expecting more from the movie and wasn't disappointed. **positive sentiment)** |
| Confirmation based augmentation | Asking questions to confirm that the person understands and agrees with the sentiment being expressed. | (Looks like the viewer did not like the movie. **Yes**) |
| Direct question augmentation | To get a clear and direct answer. | (Did you enjoy the movie? **No**) |
| Paraphrase based augmentation: | repeating or paraphrasing what the person has said to ensure understanding | (So, you're saying that the movie didn't live up to your expectations? **Yes**) |
| Hypothesis based augmentation | Involves making a hypothesis about the | (Based on what you've told me, it seems like you |
|  | sentiment and then asking questions to confirm or disprove it. | were disappointed by the movie. Is that correct? **Yes**) |
| Probing based augmentation | To gather more information about a specific aspect of the base data point. | (Would you watch the movie again? **Yes/No**) (Would you recommend the movie to others? **Yes/No**) |

In an example embodiment, an administrator or users of the system 100 may choose the dimensions for augmenting the data to test the model's understanding of the underlying tasks. In particular, the system 100 may first augment the data in chosen dimensions, and the users may need to specify an expected accuracy for the model on the base data and how good the accuracy should be in each of the chosen dimensions of interest. For example, in case the below three dimensions are selected:

Base Data - desired accuracy of 80%

Negation based data - desired accuracy of 70%
Paraphrase based data - desired accuracy of 75%
Direct question based data - desired accuracy of 70%

In such a case, the system 100 may fine-tune a language model only on the base data for one cycle and test the accuracy on the base data as well as the other selected augmentation dimensions. Further, the system 100 may fine-tune the model until it reaches the desired accuracy in each selected augmentation dimension or stop after predefined number of cycles/epochs. After each epoch of training (fine-tuning), the new training data may include data inverse to the proportion of how the model is doing in each of the augmentation dimensions. For example, if the model got 75% accuracy for base data, 40% for negation-based data, 60% in paraphrase based data, and 70% in direct question-based data; the system 100 may randomly sample 1/0.75 of base data, 11.40 of negation data, 1/.6 of paraphrase data, and 1/0.7 of question-based data to train the model for another epoch.

Therefore, by way of implementing the proposed system and method, a trained model is learning the pattern in the base data and also understanding the underlying possible perturbations of the data.

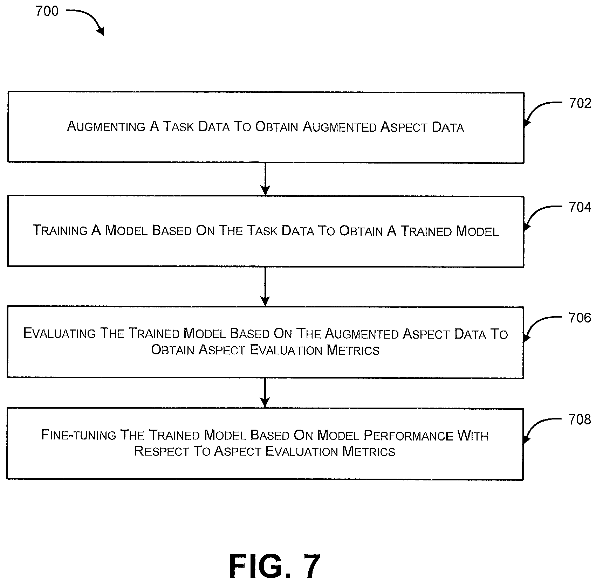

FIG. 7 illustrates an exemplary flow diagram of a method 700 for evaluating the reliability of a model, according to embodiments of the present disclosure. At step 702, the method 700 may include augmenting, by a processor, a task data to obtain an augmented aspect data. The augmented aspect data may include a plurality of aspect queries obtained by augmentation of a base query in the task data based on at least one aspect. In an example embodiment, each aspect pertains to a variable form of assessment of the base query.

Further, at step 704, the method 700 may include training, by the processor, using the task data, a model to obtain a trained model. At step 706, the method 700 may include evaluating, by the processor, based on the augmented aspect data, the trained model to obtain aspect evaluation metrics. The evaluation may enable to assess performance of the trained model by computing a performance score based on the aspect evaluation metrics. The performance score may enable to evaluate reliability of the trained model in a pre-defined domain.

Furthermore, at step 708, the method 700 may include executing, by the processor, a fine-tuning iterative loop to re-train the model, if the performance score is lower than a pre-defined threshold value. The fine-tuning iterative loop may correspond to repeated cycles including the re-training of the model based on the task data and a subsequent evaluation of the model based on the augmented aspect data.

It will be appreciated that the steps shown in FIG. 7 are merely illustrative. Other suitable steps may be used to implement the proposed system and method, if desired. Moreover, the steps of the method 700 may be performed in any order and may include additional steps.

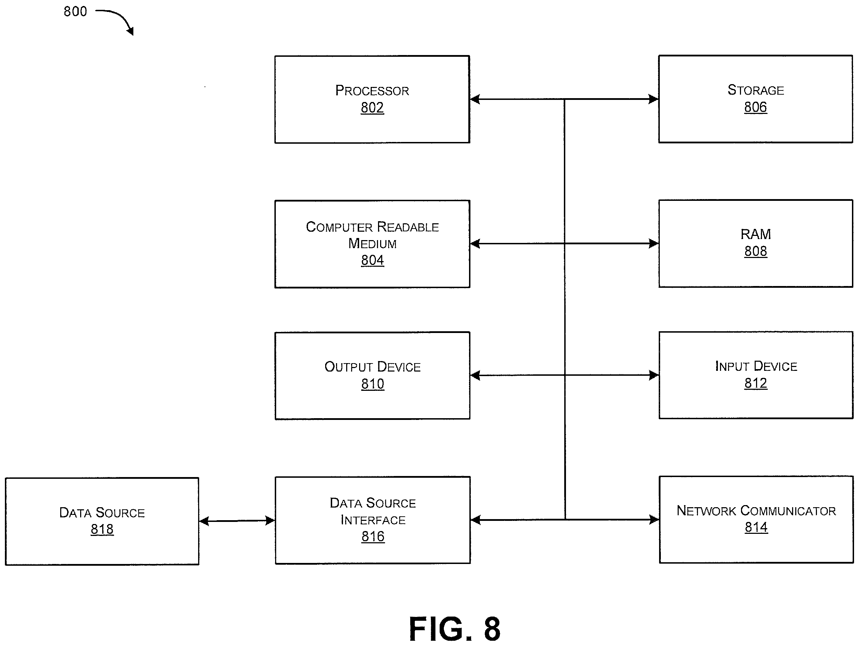

FIG. 8 illustrates a hardware platform 800 in which or with which embodiments of the present disclosure may be implemented. For the sake of brevity, construction and operational features of the system 100 which are explained in detail above are not explained in detail herein. Particularly, computing machines, such as but not limited to internal/external server clusters, quantum computers, desktops, laptops, smartphones, tablets, and wearables which may be used to execute the system 100 or may include the structure of the hardware platform 800. As illustrated, the hardware platform 800 may include additional components not shown, and that some of the components described may be removed and/or modified. For example, a computer system with multiple graphics processing units (GPUs) may be located on external-cloud platforms, or internal corporate cloud computing clusters, or organizational computing resources, etc.

The hardware platform 800 may be a computer system, such as the system 100 that may be used with the embodiments described herein. The computer system may represent a computational platform that includes components that may be in a server or another computer system. The computer system may execute, by a processor 802 (e.g., a single or multiple processors) or other hardware processing circuit, the methods, functions, and other processes described herein. These methods, functions, and other processes may be embodied as machine-readable instructions stored on a computer-readable medium, which may be non-transitory, such as hardware storage devices (e.g., random access memory (RAM), read-only memory (ROM), erasable, programmable ROM (EPROM), electrically erasable, programmable ROM (EEPROM), hard drives, and flash memory). The computer system may include the processor 802 that executes software instructions or code stored on a non-transitory computer-readable storage medium 804 to perform methods of the present disclosure. The software code includes, for example, instructions to establish data augmentation and enrichment within a data repository. In an example, components 104, 106, and 108 of FIG. 1 may be software codes or components performing these steps.

The instructions on the computer-readable storage medium 804 are read and stored in a storage 806 or in a RAM 808. The storage 806 may provide space for keeping static data where at least some instructions could be stored for later execution. The stored instructions may be further compiled to generate other representations of the instructions and dynamically stored in the RAM, such as RAM 808. The processor 802 may read instructions from the RAM 808 and perform actions as instructed.

The computer system may further include an output device 810 to provide at least some of the results of the execution as output including, but not limited to, visual information to users, such as external agents. The output device 810 may include a display on computing devices and virtual reality glasses. For example, the display may be a mobile phone screen or a laptop screen. Graphical user interface (GUI) and/or text may be presented as an output on the display screen. The computer system may further include an input device 812 to provide a user or another device with mechanisms for entering data and/or otherwise interact with the computer system. The input device 812 may include, for example, a keyboard, a keypad, a mouse, or a touchscreen. Each of the output device 810 and input device 812 may be joined by one or more additional peripherals. For example, the output device 810 may be used to display intermediate and/or final results of establishing data augmentation and enrichment by the system 100.

A network communicator 814 may be provided to connect the computer system to a network and in turn to other devices connected to the network including other clients, servers, data stores, and interfaces, for instance. The network communicator 814 may include, for example, a network adapter, such as a local area network (LAN) adapter or a wireless adapter. The computer system may include a data source interface 816 to access a data source 818. The data source 818 may be an information resource. As an example, a database of exceptions and rules may be provided as the data source 818. Moreover, knowledge repositories and curated data may be other examples of the data source 818.

One of ordinary skill in the art will appreciate that techniques consistent with the present disclosure are applicable in other contexts as well without departing from the scope of the disclosure.

What has been described and illustrated herein are examples of the present disclosure. The terms, descriptions, and figures used herein are set forth by way of illustration only and are not meant as limitations. Many variations are possible within the spirit and scope of the subject matter, which is intended to be defined by the following claims and their equivalents in which all terms are meant in their broadest reasonable sense unless otherwise indicated.

**Claims**

1. A system, comprising:
   a processor coupled with a memory, wherein the memory stores instructions to be executed by the processor, the processor comprising:

   a data augmentor to:

   receive a task data pertaining to information related to a pre-defined task to be performed by a model; and augment the task data to obtain an augmented aspect data, wherein the augmented aspect data comprises a plurality of aspect queries obtained by augmentation of a base query in the task data based on at least one aspect, and wherein each aspect pertains to a variable form of assessment of the base query; and

   a model evaluator to:

   evaluate, based on the augmented aspect data, a trained model to obtain aspect evaluation metrics, wherein the trained model is trained using the task data, wherein the evaluation enables to assess performance of the trained model by computing a performance score based on the aspect evaluation metrics, and wherein the performance score enables to evaluate reliability of the trained model in a pre-defined domain.

2. The system of claim 1, wherein the reliability of the trained model in the pre-defined domain is evaluated based on a pre-defined threshold value, wherein, optionally, the pre-defined threshold value is configurable based on the pre-defined domain.

3. The system of claim 2, wherein the model is re-trained using the task data based on the performance score being lower than the pre-defined threshold value, and wherein the trained model is implemented for prediction in the pre-defined domain based on the performance score being greater than the pre-defined threshold value.

4. The system of claim 2 or 3, wherein the processor comprises a fine tuning engine to:
   execute a fine-tuning iterative loop to re-train the model based on the performance score being lower than the pre-defined threshold value, wherein the fine-tuning iterative loop corresponds to repeated cycles comprising re-training of the model based on the task data and a subsequent evaluation of the re-trained model based on the augmented aspect data.

5. The system of claim 4, wherein the fine-tuning iterative loop comprises re-training of the model based on the task data and a loss function including a penalization parameter, and wherein the penalization parameter pertains to penalization corresponding to one or more aspects of the augmented aspect data, wherein, optionally, an extent of the penalization depends on model performance and accuracy with respect to the augmented aspect data, and wherein, optionally, the penalization of the loss function for each aspect is based on a pre-defined threshold.

6. The system of any of the preceding claims, wherein the aspect pertains to at least one of: a contradiction aspect, a counterfactual aspect, a negation aspect, a domain based aspect, and a style transfer aspect.

7. A method for evaluation of reliability of a model, the method comprising:

augmenting, by a processor, a task data to obtain an augmented aspect data, wherein the augmented aspect data comprises a plurality of aspect queries obtained by augmentation of a base query in the task data based on at least one aspect, and wherein each aspect pertains to a variable form of assessment of the base query;
training, by the processor, using the task data, the model to obtain a trained model;
evaluating, by the processor, based on the augmented aspect data, the trained model to obtain aspect evaluation metrics, wherein the evaluation enables to assess performance of the trained model by computing a performance score based on the aspect evaluation metrics, and wherein the performance score enables to evaluate the reliability of the trained model in a pre-defined domain; and
executing, by the processor, a fine-tuning iterative loop to re-train the model based on the performance score being lower than a pre-defined threshold value, wherein the fine-tuning iterative loop corresponds to repeated cycles including the re-training of the model based on the task data and a subsequent evaluation of the re-trained model based on the augmented aspect data.

8. The method of claim 7, comprising implementing the trained model for prediction in the pre-defined domain based on the performance score being greater than the pre-defined threshold value.

9. A non-transitory computer-readable medium comprising machine-executable instructions that are executable by a processor to:

augment a task data to obtain an augmented aspect data, wherein the augmented aspect data comprises a plurality of aspect queries obtained by augmentation of a base query in the task data based on at least one aspect, and wherein each aspect pertains to a variable form of assessment of the base query,
train, using the task data, a model to obtain a trained model;
evaluate, based on the augmented aspect data, the trained model to obtain aspect evaluation metrics, wherein the evaluation enables to assess performance of the trained model by computing a performance score based on the aspect evaluation metrics, and wherein the performance score enables to evaluate a reliability of the trained model in a pre-defined domain; and
execute a fine-tuning iterative loop to re-train the model based on the performance score being lower than a pre-defined threshold value, wherein the fine-tuning iterative loop corresponds to repeated cycles including the re-training of the model based on the task data and a subsequent evaluation of the re-trained model based on the augmented aspect data.

10. The non-transitory computer-readable medium of claim 9, wherein the processor implements the trained model for prediction in the pre-defined domain based on the performance score being greater than the pre-defined threshold value.

11. The non-transitory computer-readable medium of claim 9 or 10, wherein the pre-defined threshold value is configurable based on the pre-defined domain.

12. The non-transitory computer-readable medium of claim 9, 10 or 11, wherein the aspect pertains to at least one of: a contradiction aspect, a counterfactual aspect, a negation aspect, a domain based aspect, and a style transfer aspect.

13. The non-transitory computer-readable medium of any of claims 9 to 12, wherein the fine-tuning iterative loop comprises re-training of the model based on the task data and a loss function including a penalization parameter, and wherein the penalization parameter pertains to penalization corresponding to one or more aspects of the augmented aspect data, wherein, optionally, an extent of the penalization depends on model performance and accuracy with respect to the augmented aspect data, and wherein, optionally, the penalization of the loss function for each aspect is based on a pre-defined threshold.

14. The system of any of claims 1 to 6, the method of claim 7 or 8, or the non-transitory computer-readable medium of any of claims 9 to 13, wherein the model is an artificial intelligence (AI) model.

15. The system of any of claims 1 to 6 or claim 14, the method of claim 7, 8 or 14, or the non-transitory computer-readable medium of any of claims 9 to 14, wherein the model is a deep learning (DL) based language model.

100

DATA AUGMENTOR
104

MODEL
EVALUATOR
106

PROCESSOR
102

FINE TUNING
ENGINE
108

MEMORY
110

DATABASE
112

# FIG. 1

EP 4 224 359 A1

200 ⌐

| Q1: WHAT DRUG THE PATIENT WAS GIVEN?<br>Q2: WHAT CONDITION THE PATIENT WAS HAVING?<br>202 | LANGUAGE MODEL-BASED SYSTEM TRAINED FOR<br>BIOMEDICAL QUESTION-ANSWERING TASK<br><br>CLINICAL NOTES | ANS 1: MORPHINE<br>ANS 2: CHEST PAIN<br>204 |

# FIG. 2A

250 ⌐

| TASK DATA<br>252 | STEP-1<br><br>TRAINING A TRANSFORMER ARCHITECTURE<br>BASED DEEP MODEL | TRAINED MODEL<br>254 | STEP-2 | EVALUATION METRIC<br>BASED ON TASK DATA<br>256 |

# FIG. 2B

FIG. 3

400

| Base Query | What Drug The Patient Was Given? |
|---|---|
| Contradiction | If Patient Needed Drug If He/She Not Had Chest-pain? |
| Counterfactual Perturbation | What If Patient had Chest Pain and Nausea? |
| Negation | If The Patient Was not Given Morphine ? |
| Domain Aspect | If Morphine Combination Combination of Chemical ? |
| Style Transfer | Was the Patient Definitely Administered Morphine? |

# FIG. 4

500

| [X1 X2 . . . Xn] 502 | → | LMs Based Network 504 | → | [Y1 Y2 . . . Yk] 506 |
|---|---|---|---|---|

# FIG. 5

EP 4 224 359 A1

600

[X1
X2
.
.
Xn]
502

[Y1
Y2
.
.
Yk]
506

AUGMENTATION OF
DATA

[X11, X12....,
X21, X22....,
.
.
Xn1, Xn2, Xn3.....]
602

[Y11, Y12....,
Y21, Y22....,
.
.
Yk1, Yk2, Yk3.....]
606

MODEL INPUT

MODEL OUTPUT

LMs BASED NETWORK
504

FIG. 6

700

702

AUGMENTING A TASK DATA TO OBTAIN AUGMENTED ASPECT DATA

704

TRAINING A MODEL BASED ON THE TASK DATA TO OBTAIN A TRAINED MODEL

706

EVALUATING THE TRAINED MODEL BASED ON THE AUGMENTED ASPECT DATA TO OBTAIN ASPECT EVALUATION METRICS

708

FINE-TUNING THE TRAINED MODEL BASED ON MODEL PERFORMANCE WITH RESPECT TO ASPECT EVALUATION METRICS

# FIG. 7

800

| | |
|---|---|
| PROCESSOR 802 | STORAGE 806 |
| COMPUTER READABLE MEDIUM 804 | RAM 808 |
| OUTPUT DEVICE 810 | INPUT DEVICE 812 |

| | | |
|---|---|---|
| DATA SOURCE 818 | DATA SOURCE INTERFACE 816 | NETWORK COMMUNICATOR 814 |

FIG. 8

Europäisches Patentamt

European Patent Office

Office européen des brevets

# EUROPEAN SEARCH REPORT

Application Number

EP 23 15 5355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/390951 A1 (GADDE SRINIVASA PHANI KUMAR [US] ET AL) 16 December 2021 (2021-12-16) * paragraphs [0002], [0006], [0030] * * paragraphs [0107] - [0114]; figure 3 * * paragraphs [0115] - [0123] * * paragraphs [0124] - [0133]; figure 5A * * paragraphs [0134] - [0160]; figure 5B * * paragraph [0201]; figure 8 * ----- | 1-15 | INV. G06F40/30 G06N3/08 G06N3/02 |
| A | MAHAJAN DIWAKAR ET AL: "Identification of Semantically Similar Sentences in Clinical Notes: Iterative Intermediate Training Using Multi-Task Learning", JMIR MEDICAL INFORMATICS, vol. 8, no. 11, 27 November 2020 (2020-11-27), page e22508, XP093054930, DOI: 10.2196/22508 Retrieved from the Internet: URL:https://medinform.jmir.org/2020/11/e22508/PDF> * abstract * * page 4 - page 9; figures 2,3,4; tables 1-3 * ----- | 1-15 | |
| A | US 2020/372395 A1 (MAHMUD JALAL [US] ET AL) 26 November 2020 (2020-11-26) * paragraphs [0006] - [0009]; figure 1 * * paragraphs [0054] - [0056]; figures 5-6 * ----- | 1-15 | |
| A | US 2020/110994 A1 (GOTO TAKUYA [JP] ET AL) 9 April 2020 (2020-04-09) * paragraphs [0002], [0003] * * paragraphs [0023] - [0035]; figures 2,3,4 * ----- | 1-15 | |

| | | TECHNICAL FIELDS SEARCHED (IPC) |
|---|---|---|
| | | G06F G06N |

The present search report has been drawn up for all claims

| Place of search | Date of completion of the search | Examiner |
|---|---|---|
| Berlin | 16 June 2023 | Chéron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 5355

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| US 2021390951 | A1 | 16-12-2021 | CN | 115917553 A | 04-04-2023 |
| | | | EP | 4165540 A1 | 19-04-2023 |
| | | | US | 2021390951 A1 | 16-12-2021 |
| | | | WO | 2021252845 A1 | 16-12-2021 |
| US 2020372395 | A1 | 26-11-2020 | CN | 111967604 A | 20-11-2020 |
| | | | US | 2020372395 A1 | 26-11-2020 |
| | | | US | 2020372404 A1 | 26-11-2020 |
| US 2020110994 | A1 | 09-04-2020 | CN | 111008688 A | 14-04-2020 |
| | | | US | 2020110994 A1 | 09-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63307500